# FASCICULE DE BREVET EUROPEEN

(11) **EP 1 760 332 B1**
(45) Date de publication et mention de la délivrance du brevet: **12.03.2008**
(21) Numéro de dépôt: 06291356.1
(22) Date de dépôt: 25.08.2006
(51) Int. Cl.: F16B 19/14

(54) **Article à fixer sur un support au moyen d'un outil à gaz comprime**
Ein Gegenstand, der mittels eines Gasdruckwerkzeugs auf eine Unterlage befestigt wird
An article, which is fastened by means of a gas pressure tool on a substrate

(30) Priorité: 29.08.2005 FR 0508824
(43) Date de publication de la demande: 07.03.2007
(73) Titulaire: LEGRAND FRANCE, 87000 Limoges (FR); LEGRAND SNC, 87000 Limoges (FR)
(72) Inventeur: Dumas Eric, 87340 La Jonchere (FR); Fourcade Jean Pierre, 87920 Condat sur Vienne (FR); Hasholder Florent, 87260 Vicq sur Breuilh (FR); Renaud Laurent, 87410 Le palais sur Vienne (FR)
(74) Mandataire: Quantin, Bruno Marie Henri

(56) Documents cités:
- AU-B2- 694 792
- FR-A- 2 834 021

## Description

### DOMAINE DE L'INVENTION

L'invention concerne le domaine général de la fixation par l'intermédiaire d'un outil à gaz comprimé adapté à propulser un organe de fixation.

L'invention concerne plus particulièrement un article à fixer sur un support à l'aide d'un tel outil.

### ARRIERE-PLAN TECHNOLOGIQUE

On connaît du document FR 2 786 541 un accessoire de fixation de forme générale cylindrique qui comporte un perçage central entouré par des lèvres d'engagement s'étendant transversalement par rapport à l'axe du perçage central.

Cet accessoire de fixation est mis en oeuvre lors de la fixation d'un article (par exemple une goulotte pour câble électrique ou un collier de serrage) sur un support de sorte que l'accessoire de fixation soit disposé contre l'article à fixer qui lui-même est disposé contre le support sur lequel il doit être fixé. Un outil adapté à la propulsion d'un organe de fixation est maintenu contre l'accessoire de fixation grâce aux lèvres d'engagement de sorte qu'un organe de fixation puisse être propulsé à travers le perçage de l'organe de fixation et à travers l'article à fixer pour venir s'enfoncer dans le support.

On connaît également du document FR 2 834 021 un procédé pour la fixation d'un article sur un support, procédé selon lequel on positionne un accessoire de fixation au droit d'un trou de fixation de l'article et on fixe cet accessoire au support à l'aide d'un outil qui propulse un organe de fixation au travers de l'accessoire de fixation et du trou de fixation pour l'ancrer dans le support.

On connaît par ailleurs du document EP 1 099 864 une embase de fixation d'une pièce perforée à un support. Cette embase comporte un téton de positionnement de l'embase par rapport à la perforation de la pièce à fixer sur le support. Ce téton de positionnement permet d'amortir le choc induit par la frappe de l'organe de fixation propulsé, appelé tampon.

L'embase comporte également une cheminée s'étendant dans la direction de fixation du tampon et munie d'ailettes radiales. Cette cheminée permet également d'amortir le choc induit par la frappe du tampon contre l'embase, lors de la fixation.

### OBJET DE L'INVENTION

L'invention a pour but d'améliorer ce type de dispositifs connus.

A cet effet, l'invention vise un article à fixer sur un support, comportant une paroi présentant :
- un orifice de passage d'un organe de fixation dudit article sur ledit support ;
- une surface d'appui pour l'organe de fixation bordant ledit orifice ;
- des moyens d'entretoisement qui sont saillants du pourtour de la surface d'appui pour l'organe de fixation et qui présentent une surface d'appui pour un outil à gaz comprimé adapté à propulser un dit organe de fixation à travers ledit orifice ;
caractérisé en ce que les moyens d'entretoisement comportent, entre la surface d'appui pour l'organe de fixation et la surface d'appui pour l'outil, au moins une ouverture débouchant, d'une part dans l'espace que regarde la surface d'appui pour l'organe de fixation et, d'autre part à l'air libre y compris lorsque l'outil est disposé contre la surface d'appui pour l'outil, chaque dite ouverture étant adaptée à l'évacuation hors dudit espace du gaz comprimé éjecté par l'outil.

Un tel article à fixer peut être mis en oeuvre sans craindre sa détérioration. Cet article peut en effet être soit une embase ou un accessoire de fixation pour la fixation d'un article à un support ou bien être un appareil électrique à fixer directement sur un support, sans accessoire supplémentaire. Cet article peut ainsi être fixé par un organe de fixation propulsé par un outil à gaz comprimé de sorte que cet organe de fixation vient percuter la deuxième surface d'appui avec une force qui n'est pas suffisante pour casser cet article à fixer.

Les observations et les essais menés par les inventeurs les ont amenés à conclure que l'éclatement de la matière constituant un article à fixer lors de l'impact de l'organe de fixation est essentiellement provoqué par le gaz sous pression éjecté de l'outil et de la surpression qu'il provoque au niveau de la surface d'appui pour l'organe de fixation.

Par conséquent, les dispositifs d'amortissement tels que décrits dans la demande EP 1 099 864, bien qu'ils donnent satisfaction, ne suppriment pas la cause essentielle de l'éclatement de la matière de l'article à fixer.

Afin de supprimer cette cause, la présente invention a prévu d'évacuer le gaz comprimé à la sortie de l'outil.

Bien que les dispositifs décrits dans les demandes FR 2 786 541 et FR 2 834 021 ne décrivent pas à proprement dit de moyens d'amortissement, les accessoires de fixation décrits sont eux-mêmes des organes permettant d'amortir l'impact de l'organe de fixation et sont prévus pour être employés comme une pièce rapportée, la fixation directe d'un article tel qu'une goulotte n'étant pas considérée comme envisageable dans ces demandes.

Selon l'invention, l'évacuation du gaz comprimé permet une fixation même directe de l'article sans détérioration, cet article étant de construction extrêmement simple, peu onéreuse, et ne comportant pas de pièce mobile ou destinée à amortir par écrasement le choc.

Un agencement selon l'invention peut être prévu directement sur un article tel qu'un appareil électrique, par exemple un boîtier pour prise électrique, dans la mesure où l'éclatement de la matière n'est plus à craindre et où un organe d'amortissement n'est plus nécessaire.

Selon une caractéristique préférée, ledit orifice de passage est un orifice oblong permettant un ajustement de la position de l'article dans le cas d'une fixation par vis de l'article sur le support.

Les moyens d'entretoisement peuvent par ailleurs présenter une surface oblique reliant la surface d'appui pour l'outil à la surface d'appui pour l'organe de fixation.

Selon une autre caractéristique préférée, l'article comporte en outre un épaulement bordant la surface d'appui pour l'outil et empêchant le glissement latéral de l'outil lorsque ce dernier est disposé contre la surface d'appui pour l'outil. Ledit épaulement peut en outre présenter une surface oblique saillante de la surface d'appui pour l'outil.

Selon d'autres caractéristiques préférées :
- l'article comporte en outre un socle solidaire de ladite paroi de sorte que le contact entre ledit article et le support se fait par l'intermédiaire du socle ;
- ladite au moins une ouverture débouche également au niveau de la surface de ladite paroi qui est destinée à entrer en contact avec le support ;
- ladite paroi comporte un renfort d'épaisseur du côté de la surface de ladite paroi destinée à entrer en contact avec le support, et/ou du côté de la surface d'appui pour l'outil.

Comme exposé précédemment, l'article peut être indifféremment un appareil électrique, un boîtier pour appareil électrique, ou un accessoire de fixation destiné à être rapporté sur une pièce pour la fixation de cette dernière sur un support.

Selon un mode de réalisation, les moyens d'entretoisement comportent deux pions d'appui disposés de part et d'autre de l'orifice de sorte que deux espaces soient libérés sur le pourtour de la surface d'appui pour l'organe de fixation, entre lesdits pions d'appui, ces espaces formant lesdites ouvertures. Ces pions d'appui peuvent présenter chacun une forme en arc de cercle coaxial avec l'orifice et être disposés dans un évidement de forme générale cylindrique pratiqué dans ladite paroi.

Un tel évidement peut par ailleurs comporter en outre une anse latérale en vis-à-vis de chaque dite ouverture, lesdites anses pouvant présenter une surface oblique saillante de la surface d'appui pour l'organe de fixation.

Selon un autre mode de réalisation, les moyens d'entretoisement comportent des nervures bordant la surface d'appui pour l'organe de fixation et présentant entre elles des espaces formant lesdites ouvertures, la surface d'appui pour l'outil étant formée par la tranche libre desdites nervures. Lesdites nervures peuvent être disposées en étoile, chacune s'étendant selon un plan transversal à la surface d'appui pour l'organe de fixation et coupant l'axe de l'orifice.

Par exemple, l'article peut comporter six desdites nervures définissant six ouvertures dont trois débouchent sur la surface de ladite paroi destinée à venir en contact avec le support.

### BREVE DESCRIPTION DES FIGURES

D'autres caractéristiques et avantages de l'invention apparaissent à la lumière de la description qui va suivre d'un mode de réalisation préféré donné à titre d'exemple non limitatif, description faite en référence aux dessins annexés dans lesquels :
- la figure 1 est une vue en perspective d'un article selon l'invention destiné à être fixé sur un support ;
- la figure 2 est une vue de dessus de l'article de la figure 1 ;
- la figure 3 est une vue selon la coupe III - III de la figure 2 ;
- la figure 4 est une vue selon la coupe IV - IV de la figure 2 ;
- la figure 5 est une vue en coupe de l'article dans la position de la figure 3 sur lequel est appuyé le nez d'un outil à gaz comprimé ;
- la figure 6 est une vue des mêmes éléments que la figure 5 mais selon une coupe correspondant à la figure 4 ;
- la figure 7 est une vue en perspective d'un appareil électrique en tant qu'article selon un autre mode de réalisation de l'invention, cet article étant représenté selon une coupe traversant l'orifice de passage pour l'organe de fixation ;
- la figure 8 est une vue de face en coupe des éléments de la figure 7, l'organe de fixation étant logé dans le support ;
- la figure 9 est une vue en perspective et en coupe de l'appareil électrique des figures 7 et 8, l'appareil électrique étant ici fixé sur le support grâce à une vis ;
- la figure 10 est une vue en perspective d'un accessoire de fixation selon un autre mode de réalisation de l'invention ;
- la figure 11 est une vue de dessus de l'accessoire de fixation de la figure 10 ;
- la figure 12 est une vue en perspective du dessous de l'accessoire des figures 10 et 11.

### DESCRIPTION DÉTAILLÉE D'UN EXEMPLE DE RÉALISATION

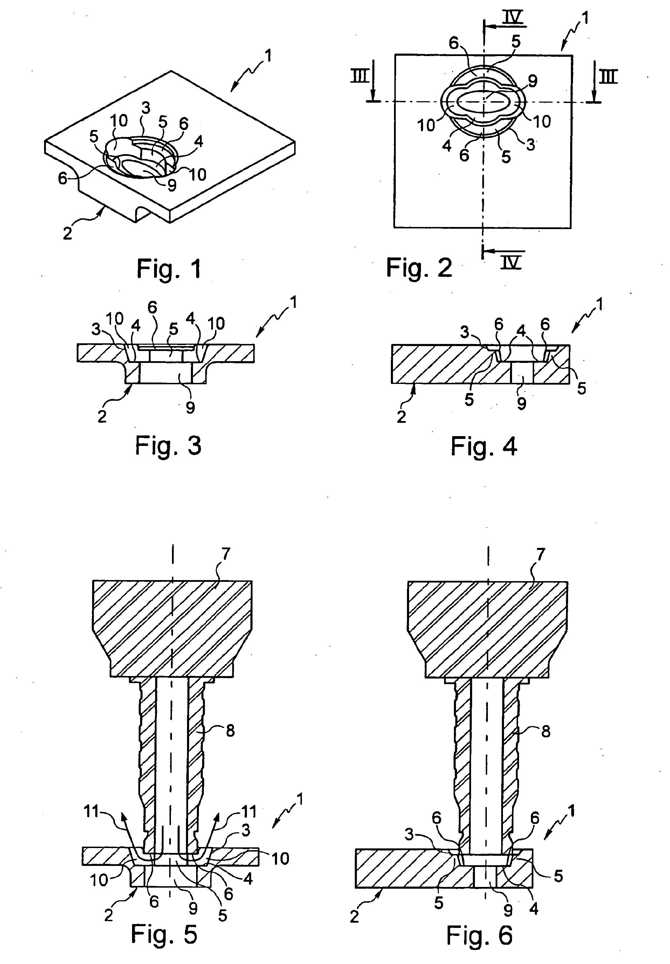

L'article à fixer sur un support selon le mode de réalisation des figures 1 à 6 est un accessoire de fixation 1 destiné à servir de pièce intermédiaire pour fixer un appareil électrique sur un support, ou bien pouvant faire partie intégrante d'un appareil électrique en vue de sa fixation directe sur un support.

L'accessoire de fixation 1 représenté aux figures 1 à 4 comporte une surface inférieure 2 destinée à venir en appui contre le support sur lequel l'accessoire de fixation 1 doit être fixé. Un renfort d'épaisseur est prévu du côté de cette surface inférieure 2.

L'accessoire de fixation 1 comporte également un évidement 3 définissant une surface d'appui 4 pour un organe de fixation. Cet évidement 3 reçoit contre la surface d'appui 4 et contre sa surface latérale interne deux pions d'appui 5 de forme générale en arc de cercle. Ces pions d'appui 5 forment des moyens d'entretoisement définissant une surface d'appui 6 pour un outil à gaz comprimé 7 tel que celui représenté aux figures 5 et 6.

Les pions d'appui 5 présentent également une surface oblique reliant la surface d'appui 6 pour l'outil à la surface d'appui 4 pour l'organe de fixation.

L'outil à gaz comprimé 7 comporte en effet un nez 8 comportant un canal interne cylindrique à travers lequel l'outil 7 est adapté à propulser un organe de fixation à travers un orifice 9 de l'accessoire de fixation 1 lorsque le nez 8 de l'outil 7 est en appui sur la surface d'appui 6, c'est-à-dire sur les deux pions d'appui 5.

L'orifice 9 est ici un trou oblong débouchant d'une part dans le fond de l'évidement 3 et débouchant d'autre part au niveau de la surface inférieure 2. Un organe de fixation projeté par l'outil 7 traverse donc de part en part l'accessoire de fixation 1, le long de l'orifice 9, jusqu'à venir s'appuyer sur la surface d'appui 4 pour l'organe de fixation et ainsi fixer l'accessoire de fixation 1 sur un support.

L'orifice 9 en forme de trou oblong permet ainsi la fixation directe de l'accessoire de fixation 1 maintenu contre le support mais permet aussi une fixation avec ajustement possible de l'accessoire 1.

Dans ce dernier cas, l'organe de fixation employé est une vis dont la tête s'appuie sur la surface d'appui 4 de sorte que, la vis étant en place et légèrement desserrée, il est possible d'ajuster manuellement la position de l'accessoire de fixation 1 selon les dimensions du trou oblong 9 et du diamètre de la vis. Une fois la position de l'accessoire de fixation 1 ajustée, un serrage ferme de la vis assure ensuite l'immobilisation de l'accessoire 1 contre le support.

Pour permettre aux ouvertures 10 de déboucher à l'air libre dans les meilleurs conditions, l'évidement 3 comporte une anse en vis-à-vis de chaque ouverture 10. Chacune de ces anses présente une surface oblique saillante de la surface d'appui 4.

Les moyens d'entretoisement étant formés par deux pions d'appui 5 distincts, ces moyens d'entretoisement comportent deux ouvertures 10 formées chacune par un espace laissé libre entre les deux pions d'appui 5. Ces deux ouvertures 10 débouchent chacune, d'une part, dans l'espace que regarde la surface d'appui 6 pour l'outil 7 et, d'autre part, à l'air libre.

Les figures 5 et 6 montrent le positionnement de l'outil 7 sur l'accessoire de fixation 1 décrit ci-dessus. Lorsque l'extrémité du nez 8 de l'outil 7 est disposée contre la surface d'appui 6, une portion de cette extrémité est effectivement en appui contre chaque pion d'appui 5, tandis que deux autres portions de cette extrémité sont situées en vis-à-vis des ouvertures 10 et ne sont par conséquent pas en contact avec l'accessoire de fixation 1.

La figure 5 montre ainsi l'ouverture permanente disponible entre l'intérieur du nez 8 et l'air libre via les ouvertures 10 (voir les deux flèches 11 de la figure 5). La figure 6 montre quant à elle les portions de l'extrémité du nez 8 qui sont disposées contre la surface d'appui 6 lorsque l'outil 7 est en place.

Chaque ouverture 10 est ainsi adaptée à l'évacuation (suivant les flèches 11 de la figure 5) hors de l'espace que regarde la surface d'appui 4 pour l'organe de fixation du gaz comprimé éjecté par l'outil 7 lors de la propulsion d'un organe de fixation à travers l'orifice 9.

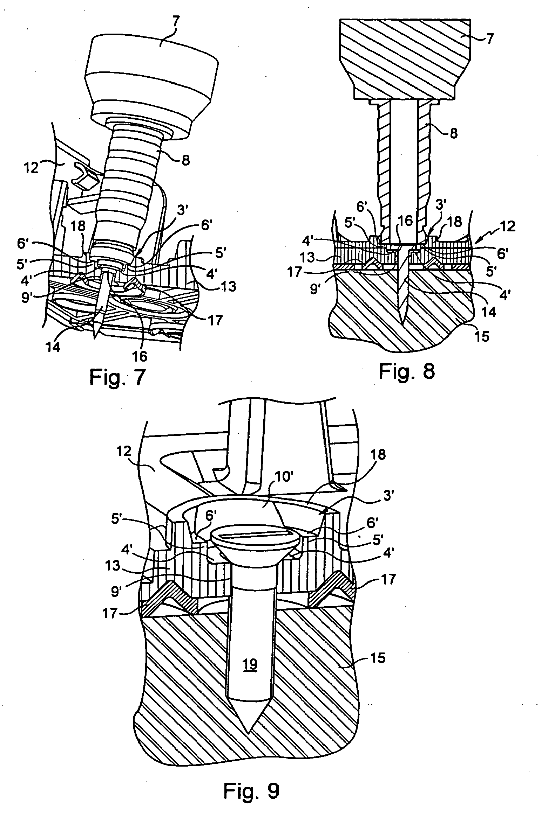

Un autre mode de réalisation de l'invention va maintenant être décrit en référence aux figures 7 à 9.

La figure 7 montre un boîtier d'appareil 12 muni d'une paroi 13 qui est sur cette figure vue en coupe. Ce boîtier 12 peut contenir par exemple un interrupteur ou une prise électrique. D'autres éléments, tels qu'une goulotte pour câble électrique, peuvent également remplacer le boîtier 12.

Conformément à l'invention, la paroi 13 présente un orifice 9' pour le passage d'un organe de fixation 14. Sur le pourtour de l'orifice 9', la paroi 13 est agencée de manière similaire à l'évidement 3 du mode de réalisation des figures 1 à 6, si ce n'est que la paroi 13 présente un renfort d'épaisseur situé cette fois-ci du côté de la surface d'appui 6.

La paroi 13 présente ainsi des moyens d'entretoisement formés de deux pions d'appui 5' saillants du pourtour d'une surface d'appui 4' pour l'organe de fixation 14, cette surface d'appui 4' bordant l'orifice 9'.

Les pions d'appui 5' présentent une surface d'appui 6' pour un outil à gaz comprimé 7 identique à celui des figures 5 et 6. De même que pour le mode de réalisation précédent, la coopération de l'extrémité du nez 8 de l'outil 7 avec les surfaces d'appui 6' permettent l'évacuation du gaz comprimé éjecté par l'outil 7 par le biais d'ouvertures 10'.

L'organe de fixation 14 des figures 7 et 8 est un clou (parfois appelé « tampon ») projeté directement par l'outil 7 à travers l'orifice 9' pour venir se planter dans le support 15 (voir figure 8).

On notera que la surface d'appui 4' pour l'organe de fixation 14 présente un espace suffisant pour que le clou 14 puisse comprimer entre sa tête et la surface d'appui 4' une douille 16 faite de matériau déformable. Cette douille 16 est courante dans ce type d'application et est un résidu du dispositif servant à maintenir les clous 14 en chapelet pour leur introduction dans le chargeur de l'outil 7.

En référence à la figure 9, l'appareil électrique 12 peut également être fixé par une vis 19, comme exposé précédemment, en procurant une fixation ajustable grâce à l'orifice oblong 9'.

On notera que la paroi 13 vient ici au contact du support 15 par l'intermédiaire d'un joint 17 de forme circulaire, assurant ainsi l'étanchéité de la fixation. Ce joint 17 peut être moulé avec la paroi 13 ou fixé de différentes façons à cette paroi, le joint est coaxial avec l'orifice 9'.

La paroi 13 de l'appareil électrique 12 comporte ici également une collerette 18 de forme circulaire saillante sur le pourtour des pions d'appui 5' et définissant un épaulement bordant la surface d'appui 6 ' pour l'outil, de manière à garantir un positionnement sûr du nez 8 de l'outil 7 contre la surface d'appui 6' en évitant au nez 8' de glisser latéralement. Cet épaulement présente une surface oblique saillante de la surface d'appui 6'.

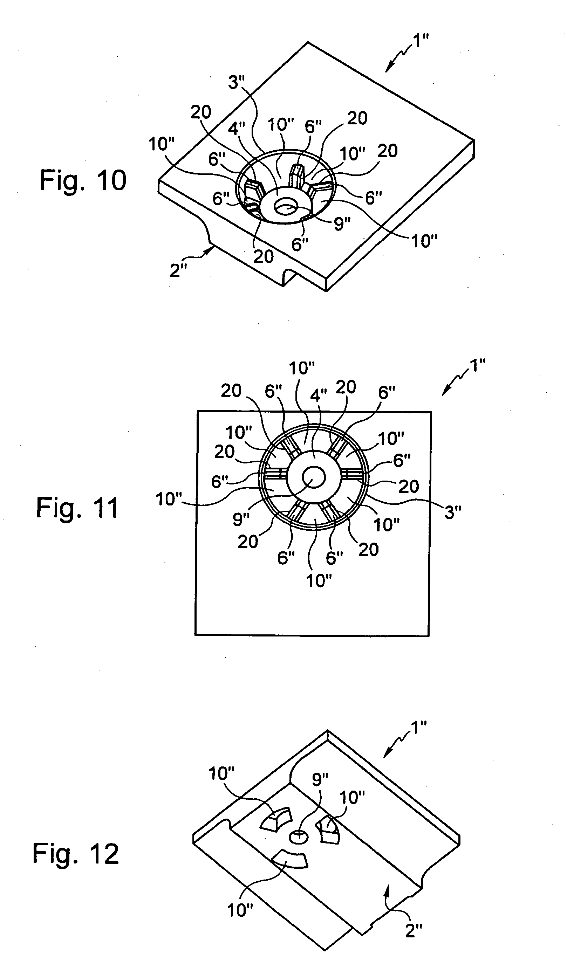

Les figures 10 à 12 représentent un accessoire de fixation 1" qui est une variante de l'accessoire de fixation 1 des figures 1 à 6.

Les éléments constituant ces accessoires de fixation 1, 1" sont identiques si ce n'est que dans l'évidement 3", la surface d'appui 6" pour un outil est définie par les tranches libres de nervures 20 réparties autour de la surface d'appui 4" pour un organe de fixation et orientées chacune dans une direction coupant l'axe de l'orifice 9".

Six ouvertures 10" sont dans le présent exemple définies entre les nervures 20 pour permettre l'échappement du gaz comprimé éjecté par l'outil.

Parmi ces six ouvertures 10", trois d'entre elles sont débouchantes au niveau de la surface inférieure 2" de l'accessoire 1" (voir figure 12). Le gaz comprimé peut ainsi être évacué aussi bien vers le haut (comme dans la figure 5) qu'à travers le matériau de l'accessoire 1" si ce dernier est par exemple fixé sur un support poreux.

Les accessoires de fixation selon les modes de réalisation décrits précédemment fonctionnent tous de la même manière indiquée ci-après.

L'accessoire de fixation est tout d'abord positionné contre un support ou contre une pièce qui elle-même est disposée contre le support.

L'opérateur maintient l'accessoire de fixation d'une main pendant que, de l'autre main, il positionne l'extrémité de l'outil à gaz comprimé contre la surface d'appui pour l'outil, et tout en exerçant une pression sur l'outil, il déclenche la propulsion d'un organe de fixation qui vient se planter dans le support en passant à travers l'orifice de l'accessoire de fixation et en s'appuyant sur la surface d'appui pour l'organe de fixation dudit accessoire.

Cette opération est répétée pour chaque organe de fixation nécessaire pour l'assujettissement de l'accessoire de fixation sur le support.

Grâce à la possibilité pour le gaz comprimé éjecté par l'outil d'être évacué par des ouvertures situées entre la surface d'appui pour l'organe de fixation et la surface d'appui pour l'outil, l'accessoire de fixation n'est pas détérioré par l'organe de fixation ainsi propulsé, sans qu'il soit nécessaire de prévoir de dispositif pour amortir le choc de l'organe de fixation sur l'accessoire de fixation.

La présence de ces ouvertures adaptées à l'évacuation du gaz comprimé permet un agencement simplifié de la surface d'appui pour l'organe de fixation, cette dernière pouvant recevoir en appui la tête d'une vis classique.

Des variantes de réalisation de l'accessoire de fixation peuvent être envisagées sans pour autant sortir du cadre de l'invention. Notamment, les différents modes de réalisation ici décrits peuvent être combinés.

## Revendications

1. Article (1, 1 ", 12) à fixer sur un support (15), comportant une paroi (13) présentant :
- un orifice (9, 9', 9") de passage d'un organe de fixation (14) dudit article (1, 1", 12) sur ledit support (15) ;
- une surface d'appui (4, 4', 4") pour l'organe de fixation (14) bordant ledit orifice (9, 9', 9") ;
- des moyens d'entretoisement (5, 5', 20) qui sont saillants du pourtour de la surface d'appui (4, 4', 4") pour l'organe de fixation (14) et qui présentent une surface d'appui (6, 6', 6") pour un outil (7, 8) à gaz comprimé adapté à propulser un dit organe de fixation (14) à travers ledit orifice (9, 9', 9") ;
**caractérisé en ce que** les moyens d'entretoisement (5, 5', 20) comportent, entre la surface d'appui (4, 4', 4") pour l'organe de fixation (14) et la surface d'appui (6, 6', 6") pour l'outil (7, 8), au moins une ouverture (10, 10', 10") débouchant, d'une part dans l'espace que regarde la surface d'appui (4, 4', 4") pour l'organe de fixation (14) et, d'autre part à l'air libre y compris lorsque l'outil (7, 8) est disposé contre la surface d'appui (6, 6', 6") pour l'outil (7, 8), chaque dite ouverture (10, 10', 10") étant adaptée à l'évacuation hors dudit espace du gaz comprimé éjecté par l'outil (7, 8).

2. Article selon la revendication 1, **caractérisé en ce que** ledit orifice (9, 9') de passage est un orifice oblong permettant un ajustement de la position de l'article dans le cas d'une fixation par vis (19) de l'article (1, 1", 12) sur le support (15).

3. Article selon l'une des revendications 1 et 2, **caractérisé en ce que** les moyens d'entretoisement (5, 5', 20) présentent en outre une surface oblique reliant la surface d'appui (6, 6', 6") pour l'outil (7, 8) à la surface d'appui (4, 4', 4") pour l'organe de fixation (14).

4. Article selon l'une des revendications 1 à 3, **caractérisé en ce qu**'il comporte en outre un épaulement bordant la surface d'appui (6, 6', 6") pour l'outil (7, 8) et empêchant le glissement latéral de l'outil (7, 8) lorsque ce dernier est disposé contre la surface d'appui (6, 6', 6") pour l'outil (7, 8).

5. Article selon la revendication 4, **caractérisé en ce que** ledit épaulement présente une surface oblique saillante de la surface d'appui (6, 6', 6") pour l'outil (7, 8).

6. Article selon l'une des revendications 1 à 5, **caractérisé en ce qu**'il comporte en outre un socle (17) solidaire de ladite paroi (13) de sorte que le contact entre ledit article (12) et le support (15) se fait par l'intermédiaire du socle (17).

7. Article selon l'une des revendications 1 à 6, **caractérisé en ce que** ladite au moins une ouverture (10") débouche également au niveau de la surface de ladite paroi qui est destinée à entrer en contact avec le support.

8. Article selon l'une des revendications 1 à 7, **caractérisé en ce que** ladite paroi comporte un renfort d'épaisseur du côté de la surface de ladite paroi destinée à entrer en contact avec le support.

9. Article selon l'une des revendications 1 à 8, **caractérisé en ce que** la paroi (13) comporte un renfort d'épaisseur du côté de la surface d'appui (6') pour l'outil (7, 8).

10. Article selon l'une des revendications 1 à 9, **caractérisé en ce que** ledit article (1, 1", 12) est un appareil électrique.

11. Article selon l'une des revendications 1 à 9, **caractérisé en ce que** ledit article est un boîtier pour appareil électrique.

12. Article selon l'une des revendications 1 à 9, **caractérisé en ce que** ledit article (1, 1") est un accessoire de fixation destiné à être rapporté sur une pièce pour la fixation de cette dernière sur un support.

13. Article selon l'une des revendications 1 à 12, **caractérisé en ce que** les moyens d'entretoisement comportent deux pions d'appui (5, 5') disposés de part et d'autre de l'orifice (9, 9') de sorte que deux espaces soient libérés sur le pourtour de la surface d'appui (4, 4') pour l'organe de fixation (14), entre lesdits pions d'appui (5, 5'), ces espaces formant lesdites ouvertures (10, 10').

14. Article selon la revendication 13, **caractérisé en ce que** les pions d'appui (5, 5') présentent chacun une forme en arc de cercle coaxial avec l'orifice (9, 9').

15. Article selon la revendication 14, **caractérisé en ce que** lesdits pions d'appui (5, 5') sont disposés dans un évidement (3, 3") de forme générale cylindrique pratiqué dans ladite paroi.

16. Article selon la revendication 15, **caractérisé en ce que** ledit évidement comporte en outre une anse latérale en vis-à-vis de chaque dite ouverture (10, 10').

17. Article selon la revendication 16, **caractérisé en ce que** lesdites anses présentent une surface oblique saillante de la surface d'appui (4, 4') pour l'organe de fixation (14).

18. Article selon l'une des revendications 1 à 12, **caractérisé en ce que** les moyens d'entretoisement comportent des nervures (20) bordant la surface d'appui (4") pour l'organe de fixation et présentant entre elles des espaces formant lesdites ouvertures (10"), la surface d'appui (6") pour l'outil étant formée par la tranche libre desdites nervures (20).

19. Article selon la revendication 18, **caractérisé en ce que** lesdites nervures (20) sont disposées en étoile, chacune s'étendant selon un plan transversal à la surface d'appui (4") pour l'organe de fixation et coupant l'axe de l'orifice (9").

20. Article selon la revendication 19, **caractérisé en ce qu**'il comporte six desdites nervures (20) définissant six ouvertures (10") dont trois débouchent sur la surface de ladite paroi destinée à venir en contact avec le support.

## Claims

1. An article (1, 1", 12) to be fixed on a support (15), comprising a wall (13) having:
- an orifice (9, 9', 9") for the passage of a fixing member (14) for fixing said article (1, 1", 12) on said support (15);
- a support surface (4, 4', 4") for the fixing member (14) which borders said orifice (9, 9', 9"); and
- bracing means (5, 5', 20) which are in projecting relationship from the periphery of the support surface (4, 4', 4") for the fixing member (14) and which have a support surface (6, 6', 6") for a compressed-gas tool (7, 8) adapted to propel a said fixing member (14) through said orifice (9, 9', 9");
**characterised in that** between the support surface (4, 4', 4") for the fixing member (14) and the support surface (6, 6', 6") for the tool (7, 8) the bracing means (5, 5', 20) comprise at least one opening (10, 10', 10") which opens on the one hand into the space that the support surface (4, 4', 4") for the fixing member (14) faces and on the other hand to the free air including when the tool (7, 8) is disposed against the support surface (6, 6', 6") for the tool (7, 8), each said opening (10, 10', 10") being adapted for the evacuation from said space of the compressed gas ejected by the tool (7, 8).

2. An article according to claim 1 **characterised in that** said passage orifice (9, 9') is an oblong orifice permitting adjustment of the position of the article in the case of a fixing by a screw (19) for the article (1, 1", 12) on the support (15).

3. An article according to one of claims 1 and 2 **characterised in that** the bracing means (5, 5', 20) also have an oblique surface connecting the support surface (6, 6', 6") for the tool (7, 8) to the support surface (4, 4', 4") for the fixing member (14).

4. An article according to one of claims 1 to 3 **characterised in that** it further comprises a shoulder bordering the support surface (6, 6', 6") for the tool (7, 8) and preventing lateral slipping movement of the tool (7, 8) when the latter is disposed against the support surface (6, 6', 6") for the tool (7, 8).

5. An article according to claim 4 **characterised in that** said shoulder has an oblique surface projecting from the support surface (6, 6', 6") for the tool (7, 8).

6. An article according to one of claims 1 to 5 **characterised in that** it further comprises a base (17) which is fixed with respect to said wall (13) in such a way that contact between said article (12) and the support (15) is made by way of the base (17).

7. An article according to one of claims 1 to 6 **characterised in that** said at least one opening (10") also opens at the level of the surface of said wall which is intended to come into contact with the support.

8. An article according to one of claims 1 to 7 **characterised in that** said wall comprises an increased thickness in relation to the surface of said wall which is intended to come into contact with the support.

9. An article according to one of claims 1 to 8 **characterised in that** the wall (13) comprises an increased thickness in relation to the support surface (6') for the tool (7, 8).

10. An article according to one of claims 1 to 9 **characterised in that** said article (1, 1", 12) is an electrical device.

11. An article according to one of claims 1 to 9 **characterised in that** said article (1, 1", 12) is a casing for an electrical device.

12. An article according to one of claims 1 to 9 **characterised in that** said article (1, 1") is a fixing accessory intended to be mounted on a part for fixing the latter on a support.

13. An article according to one of claims 1 to 12 **characterised in that** the bracing means comprise two support lugs (5, 5') disposed on respective sides of the orifice (9, 9') in such a way that two spaces are freed over the periphery of the support surface (4, 4') for the fixing member (14) between said support lugs (5, 5'), said spaces forming said openings (10, 10').

14. An article according to claim 13 **characterised in that** the support lugs (5, 5') are each in the form of a circular arc which is coaxial with the orifice (9, 9').

15. An article according to claim 14 **characterised in that** said support lugs (5, 5') are disposed in an aperture (3, 3") of cylindrical general shape provided in said wall.

16. An article according to claim 15 **characterised in that** said aperture further comprises a lateral hoop portion in facing relationship with each said opening (10, 10').

17. An article according to claim 16 **characterised in that** said hoop portions have an oblique surface projecting from the support surface (4, 4') for the fixing member (14).

18. An article according to one of claims 1 to 12 **characterised in that** the bracing means comprise ribs (20) bordering the support surface (4") for the fixing member and having between them spaces forming said openings (10"), the support surface (6") for the tool being formed by the free edge of said ribs (20).

19. An article according to claim 18 **characterised in that** said ribs (20) are disposed in a star configuration, each extending in a plane transverse to the support surface (4") for the fixing member and intersecting the axis of the orifice (9").

20. An article according to claim 19 **characterised in that** it comprises six of said ribs (20) defining six openings (10") of which three open at the surface of said wall intended to come into contact with the support.

## Patentansprüche

1. Auf einer Unterlage (15) zu befestigender Gegenstand (1, 1", 12), der eine Wand (13) umfasst mit:
- einer Öffnung (9, 9', 9") zum Hindurchführen eines Organs (14) zum Befestigen des Gegenstands (1, 1", 12) auf der Unterlage (15);
- einer Auflagefläche (4, 4', 4") für das Befestigungsorgan, welche die Öffnung (9, 9', 9") umgibt;
- Abstandsmitteln (5, 5', 20), die am Umfangsrand der Auflagefläche (4, 4', 4") für das Befestigungsorgan (14) vorstehen und eine Auflagefläche (6, 6', 6") für ein Druckgaswerkzeug (7, 8) aufweisen, das ein derartiges Befestigungsorgan (14) durch die Öffnung (9, 9', 9") hindurch einzutreiben vermag;
**dadurch gekennzeichnet, dass** die Abstandsmittel (5, 5', 20) zwischen der Auflagefläche (4, 4', 4") für das Befestigungsorgan (14) und der Auflagefläche (6, 6', 6") für das Werkzeug (7, 8) wenigstens eine Öffnung (10, 10', 10") aufweisen, die einerseits in den Raum, welcher der Auflagefläche (4, 4', 4") für das Befestigungsorgan (14) gegenüberliegt, und andererseits in die befindliche Außenluft mündet, einschließlich wenn das Werkzeug (7, 8) gegen die Auflagefläche (6, 6', 6") für das Werkzeug (7, 8) angeordnet ist, wobei jede Öffnung (10, 10', 10") das vom Werkzeug (7, 8) abgegebene Gas aus diesem Raum abzuleiten vermag.

2. Gegenstand nach Anspruch 1,
**dadurch gekennzeichnet, dass** die Durchgangsöffnung (9, 9') eine längliche Öffnung ist, die ein Anpassen der Position des Gegenstands erlaubt, falls der Gegenstand (1, 1", 12) durch eine Schraube (19) auf der Unterlage (15) befestigt wird.

3. Gegenstand nach einem der Ansprüche 1 oder 2,
**dadurch gekennzeichnet, dass** die Abstandsmittel (5, 5', 20) ferner eine schräge Fläche aufweisen, welche die Auflagefläche (6, 6', 6") für das Werkzeug (7, 8) mit der Auflagefläche (4, 4', 4") für das Befestigungsorgan (14) verbindet.

4. Gegenstand nach einem der Ansprüche 1 bis 3,
**dadurch gekennzeichnet, dass** er ferner einen Absatz aufweist, der die Auflagefläche (6, 6', 6") für das Werkzeug (7, 8) umgibt und das seitliche Abrutschen des Werkzeugs (7, 8) verhindert, wenn dieses an der Auflagefläche (6, 6', 6") für das Werkzeug (7, 8) angeordnet ist.

5. Gegenstand nach Anspruch 4,
**dadurch gekennzeichnet, dass** der Absatz eine von der Auflagefläche (6, 6', 6") für das Werkzeug (7, 8) vorspringende schräge Fläche aufweist.

6. Gegenstand nach einem der Ansprüche 1 bis 5,
**dadurch gekennzeichnet, dass** er ferner einen Sockel (17) aufweist, der mit der Wand (13) derart fest verbunden ist, dass der Kontakt zwischen dem Gegenstand (12) und der Unterlage (15) durch den Sockel (17) erfolgt.

7. Gegenstand nach einem der Ansprüche 1 bis 6,
**dadurch gekennzeichnet, dass** die wenigstens eine Öffnung (10") ebenfalls in Höhe der Wandseite mündet, die dazu bestimmt ist, mit der Unterlage in Kontakt zu kommen.

8. Gegenstand nach einem der Ansprüche 1 bis 7,
**dadurch gekennzeichnet, dass** die Wand an der Wandseite, die dazu bestimmt ist mit der Unterlage in Kontakt zu kommen, eine Dickenversteifung aufweist.

9. Gegenstand nach einem der Ansprüche 1 bis 8,
**dadurch gekennzeichnet, dass** die Wand (13) auf der Seite der Auflagefläche (6, 6', 6") für das Werkzeug (7, 8) eine Dickenversteifung aufweist.

10. Gegenstand nach einem der Ansprüche 1 bis 9,
**dadurch gekennzeichnet, dass** der Gegenstand (1, 1", 12) ein elektrisches Gerät ist.

11. Gegenstand nach einem der Ansprüche 1 bis 9,
**dadurch gekennzeichnet, dass** der Gegenstand ein Gehäuse für ein elektrisches Gerät ist.

12. Gegenstand nach einem der Ansprüche 1 bis 9,
**dadurch gekennzeichnet, dass** der Gegenstand (1, 1") ein Befestigungszubehör ist, das dazu bestimmt ist, auf einem Teil aufgesetzt zu werden, um dieses auf einer Unterlage zu befestigen.

13. Gegenstand nach einem der Ansprüche 1 bis 12,
**dadurch gekennzeichnet, dass** die Abstandsmittel zwei Auflagebolzen (5, 5') aufweisen, die beiderseits der Öffnung (9, 9') solchermaßen angeordnet sind, dass am Umfangsrand der Auflagefläche (4, 4') für das Befestigungsorgan (14) zwei Zwischenräume frei bleiben, wobei die Zwischenräume die Öffnungen (10, 10") bilden.

14. Gegenstand nach Anspruch 13,
**dadurch gekennzeichnet, dass** die Auflagebolzen (5, 5') jeweils die Form eines Kreisbogens aufweisen, der mit der Öffnung (9, 9') koaxial ist.

15. Gegenstand nach Anspruch 14,
**dadurch gekennzeichnet, dass** die Auflagebolzen (5, 5') in einer allgemein zylindrischen Ausnehmung (3, 3") angeordnet sind, die in der Wand ausgebildet ist.

16. Gegenstand nach Anspruch 15,
**dadurch gekennzeichnet, dass** die Ausnehmung ferner gegenüber jeder Öffnung (10, 10') eine seitliche Ausbuchtung aufweist.

17. Gegenstand nach Anspruch 16,
**dadurch gekennzeichnet, dass** die Ausbuchtungen eine von der Auflagefläche (4, 4') für das Befestigungsorgan (14) vorspringende schräge Fläche aufweisen.

18. Gegenstand nach einem der Ansprüche 1 bis 12,
**dadurch gekennzeichnet, dass** die Abstandsmittel Rippen (20) umfassen, welche die Auflagefläche (4") für das Befestigungsorgan umgeben und untereinander Zwischenräume aufweisen, die die Öffnungen (10") bilden, wobei die Auflagefläche (6") für das Werkzeug durch den freien Rand der Rippen (20) gebildet wird.

19. Gegenstand nach Anspruch 18,
**dadurch gekennzeichnet, dass** die Rippen (20) sternförmig angeordnet sind, wobei sich jede in einer Ebene quer zur Auflagefläche (4") für das Befestigungsorgan erstreckt und die Achse der Öffnung (9") schneidet.

20. Gegenstand nach Anspruch 19,
**dadurch gekennzeichnet, dass** er sechs Rippen (20) umfasst, die sechs Öffnungen (10") bilden, von denen drei an der Wandseite münden, die dazu bestimmt ist, mit der Unterlage in Kontakt zu kommen.
